# EUROPÄISCHE PATENTSCHRIFT

(11) **EP 2 737 987 B1**
(45) Veröffentlichungstag und Bekanntmachung des Hinweises auf die Patenterteilung: **15.03.2017**
(21) Anmeldenummer: 13003767.4
(22) Anmeldetag: 29.07.2013
(51) Int. Cl.: B29C 43/14, B29C 43/18, B29C 43/20, B29C 43/52

(54) **Verfahren und Vorrichtung zur Herstellung eines Innenverkleidungsteils**
Method and device for producing an internal trim lining
Procédé et dispositif de fabrication d'une pièce d'habillage intérieur

(43) Veröffentlichungstag der Anmeldung: 04.06.2014
(73) Patentinhaber: Faurecia Innenraum Systeme GmbH, 76767 Hagenbach (DE)
(72) Erfinder: Kastell, Friedhelm, 57581 Katzwinkel (DE)
(74) Vertreter: Schatt, Markus F.

(56) Entgegenhaltungen:
- EP-A1- 1 815 977
- WO-A2-02/38352
- WO-A2-2013/004400
- US-A- 4 378 265
- DATABASE WPI Week 200430 Thomson Scientific, London, GB; AN 2004-320463 XP002722833, -& JP 2004 058303 A (TAKASHIMAYA HIHATSU KOGYO KK) 26. Februar 2004 (2004-02-26)

## Beschreibung

Die vorliegende Erfindung betrifft ein Verfahren und eine Vorrichtung zur Herstellung eines Innenverkleidungsteils für ein Fahrzeug und insbesondere ein Kraftfahrzeug.

Aus dem Stand der Technik sind Innenverkleidungsteile für Fahrzeuge mit einem Trägerteil und einer Dekorfolie bekannt. Ein solches Innenverkleidungsteil kann beispielsweise ein Verkleidungsteil für die Innenseite einer Tür des Fahrzeugs, ein Dachhimmel, ein Armaturenbrett oder ein Instrumententafel jeweils für das Fahrzeug sein.

Die WO 2013/004400 A2 offenbart ein Verfahren zur Herstellung eines Formteils, das einen Träger aus einem Faserformstoff, der an einer ersten Oberfläche mit einer Polymerfolie beschichtet ist, aufweist, wobei sich die Oberflächenstruktur der ersten Oberfläche des Trägers auf der dieser abgewandten Oberfläche der Polymerfolie abzeichnet. Zur Herstellung des Formteils werden die auf die erste Oberfläche des Trägers aufgelegte Polymerfolie und der Träger in einem ersten erwärmten Presswerkzeug zu einem Rohling verpresst, wobei die Folie durch das Verpressen in den Faserformstoff in dessen Dickenrichtung eindringt. Dieser wird anschließend in ein zweites temperierbares Presswerkzeug eingelegt und dort zu einem Formteil umgeformt.

Aus der EP 1 815 997 A1 ist ein Verfahren und eine Herstellungsstation zur Herstellung eines Verkleidungsteils bekannt. Eine PET-Fasermatte wird auf eine PET-Schaumschicht aufgelegt und zwischen einem ersten und einem zweiten Werkzeugteil eines ersten Presswerkzeugs positioniert. Die Werkzeugteile des ersten Presswerkzeugs werden zusammengefahren, mittels einer Heizvorrichtung erwärmt und die Fasermatte und die Schaumschicht zu einem Zwischenprodukt verpresst, wobei eine zumindest teilweise Kristallisation der Schichten erfolgt. Anschließend wird das Zwischenprodukt in ein zweites Presswerkzeug eingelegt und dort zu einem Verkleidungsteil umgeformt.

Die JP 2004 58303 A offenbart ebenfalls ein Verfahren zur Herstellung eines Verkleidungsteils, bei dem ein Trägerteil und eine Dekorfolie werden in jeweils mit einem ersten und einem zweitem Werkzeugteil eines Presswerkzeugs verpresst werden. Dabei werden die Werkzeugteile in einem ersten Schritt bis zu einem ersten Abstand der Konturflächen zusammengefahren und in einem zweiten Schritt derart positioniert, dass die Konturflächen in einem zweiten Abstand zueinander gelegen sind, wobei der zweite Abstand größer als der erste Abstand ist. Dabei werden die Werkzeugteile gekühlt.

Die Aufgabe der Erfindung ist, ein alternatives Verfahren und eine alternative Vorrichtung zur Herstellung eines Innenverkleidungsteils bereitzustellen, mit dem bzw. mit der eine haptisch wie auch optisch vorteilhafte Gestalt der benutzerseitigen Oberfläche des Innenverkleidungsteils sichergestellt wird.

Diese Aufgabe wird mit den Merkmalen der unabhängigen Ansprüche gelöst. Weitere Ausführungsformen sind in den auf diesen rückbezogenen Unteransprüchen angegeben.

Nach der Erfindung wird ein Innenverkleidungsteil hergestellt, das ein Trägerbauteil und eine Dekorfolie oder eine Dekorschicht aufweist.

Nach einem Aspekt der Erfindung ist ein Verfahren zur Herstellung eines Innenverkleidungsteils mit einem Trägerbauteil aus einem Faserformstoff, insbesondere einem Naturfaserformstoff, und einer Dekorfolie vorgesehen, wobei das Verfahren die folgenden Schritte aufweist:
- in einem ersten Presswerkzeug mit zwei Werkzeugteilen Vornahme eines ersten Zusammenpressens mit oder ohne Verformen eines für die Bildung der Trägerschicht vorgesehenen Trägerschicht-Halbzeugs und eines für die Bildung der Dekorschicht vorgesehenen Dekorschicht-Halbzeugs und Einstellung einer Temperatur, bei der die Fließgrenze der Materialien beider Halbzeuge erreicht wird,
- Öffnen des ersten Presswerkzeugs und dabei Ausbildung einer Struktur oder Strukturierung einer ersten Oberfläche des Dekorschicht-Halbzeugs durch Lösen des Dekorschicht-Halbzeugs von einer zweiten Formgebungsfläche des Presswerkzeugs und dadurch Bildung eines Zwischenprodukts, das eine Trägerschicht und eine Dekorschicht mit einer strukturierten ersten Oberfläche aufweist;
- mittels einer Kühlvorrichtung Aufbringen eines Kühlmediums auf die erste Oberfläche des Zwischenprodukts und dadurch Abkühlung zumindest eines an der ersten Oberfläche des Zwischenprodukts gelegenen Dicken-Teilbereichs des Querschnitts eines Zwischenprodukt-Abschnitts des Zwischenprodukts zur Stabilisierung der Oberflächenstruktur der ersten Oberfläche des Zwischenprodukts,
- in einem zweiten Presswerkzeug mit zwei Werkzeugteilen Vornahme eines zweiten Zusammenpressens und Verformens des Zwischenprodukts, so dass ein Verfahrens-Endprodukt gebildet wird.

Die Struktur einer ersten Oberfläche der Dekorschicht ist derart vorgesehen, dass diese eine Narbung ausbildet.

Nach einer Ausführungsform des erfindungsgemäßen Verfahrens ist vorgesehen, dass das erste Zusammenpressen eine Kontur-Umformung der Halbzeuge beinhaltet, sodass das Zwischenprodukt in seiner flächigen Erstreckung gekrümmt gebildet ist.

Nach einer Ausführungsform des erfindungsgemäßen Verfahrens ist vorgesehen, dass das Kühlmedium aus Wasser gebildet ist.

Nach einer Ausführungsform des erfindungsgemäßen Verfahrens ist vorgesehen, dass eine formgebende Verformungsoberfläche einer zweiten Pressverformungs-Werkzeughälfte oder eines zweiten Werkzeugsteils des ersten Presswerkzeugs, die zur Aufnahme des Dekorfolien-Halbzeugs vorgesehen ist, mit einer Antihaftschicht beschichtet ist.

Nach einer Ausführungsform des erfindungsgemäßen Verfahrens ist vorgesehen, dass als Material für das Trägerteil-Halbzeug ein Faserformstoff mit einem Flächengewicht von 80 bis 4.000 g/m² verwendet wird.

Nach einer Ausführungsform des erfindungsgemäßen Verfahrens ist vorgesehen, dass als Material für das Trägerteil-Halbzeug ein Faserformstoff verwendet wird, der Naturfasern mit einem Anteil von 40 Gewichtsprozent bis 60 Gewichtsprozent jeweils bezogen auf sein Gesamtgewicht und Fasern aus einem oder mehreren thermoplastischen Polymeren mit einem Anteil von 60 Gewichtsprozent bis 40 Gewichtsprozent aufweist.

Nach einem weiteren Aspekt der Erfindung ist eine Vorrichtung zur Herstellung eines Innenverkleidungsteils mit einem Trägerbauteil und einer Dekorschicht vorgesehen, wobei die Vorrichtung aufweist:
- ein erstes Presswerkzeug mit zwei Werkzeugteilen jeweils, die eine formgebenden Konturfläche und eine Heizvorrichtung aufweisen,
- eine Kühlvorrichtung mit einer Ausgabevorrichtung zum Aufbringen eines Kühlmittels auf eine erste Oberfläche des Zwischenprodukts, um zumindest einen an der ersten Oberfläche (Z1-1; Z2-1) des Zwischenprodukts (Z1, Z2) gelegenen Dicken-Teilbereich des Querschnitts eines Zwischenprodukt-Abschnitts des Zwischenprodukts (Z1, Z2) zu kühlen,
- ein zweites Presswerkzeug mit zwei Werkzeugteilen, die jeweils mit eine formgebende Konturfläche zur Bildung Innenverkleidungsteilsdurch eine Kontur-Umformung des Zwischenprodukts aufweisen.

Nach einer Ausführungsform der erfindungsgemäßen Vorrichtung ist vorgesehen, dass die formgebenden Konturflächen des ersten Presswerkzeugs in Größe und Gestalt derart geformt sind, dass ein in seiner flächigen Erstreckung gekrümmtes Zwischenprodukt geformt wird.

Nach einer Ausführungsform der erfindungsgemäßen Vorrichtung ist vorgesehen, dass die Ausgabevorrichtung einen Sprühkopf aufweist.

Nach einer Ausführungsform der erfindungsgemäßen Vorrichtung ist vorgesehen, dass eine formgebende Verformungsoberfläche einer Werkzeughälfte des ersten Presswerkzeugs mit einer Antihaftschicht beschichtet ist.

Nach dem erfindungsgemäßen Verfahren oder mit der erfindungsgemäßen Herstellungsvorrichtung werden in einem ersten Schritt ein zur Ausbildung eines als Trägerbauteil vorgesehenes Trägerschicht-Halbzeug und ein zur Ausbildung einer Dekorschicht vorgesehene Dekorfolie oder Dekorschicht-Halbzeug durch Zusammenpressen miteinander verbunden und aufgrund der Gestalt von konturgebenden Verformungsoberflächen der dabei jeweils verwendeten Werkzeugteile eines ersten Presswerkzeugs zu einem Zwischenprodukt mit einem ersten Verformungszustand unter Ausbildung einer Struktur einer ersten Oberfläche der Dekorfolie oder des Dekorschicht-Halbzeugs verformt. In einem weiteren Schritt erfolgt eine Verformung des Zwischenprodukts mit dem ersten Verformungszustand in ein Verfahrens-Endprodukt mit einem zweiten Verformungszustand. Vorzugsweise ist vorgesehen, dass in diesem weiteren Schritt keine weitere Struktur oder Narbung in der ersten Oberfläche der Dekorschicht ausgebildet wird. Dabei kann insbesondere vorgesehen sein, dass die Verformungsoberfläche des zweiten Werkzeugteils des zweiten Presswerkzeugs, an der die Dekorfolie oder das Dekorschicht-Halbzeug bei der Verformung des Zwischenprodukts anliegt, in seiner ebenen Erstreckung eine glatte, also unstrukturierte Oberfläche hat. Diese Verformungsoberfläche des zweiten Werkzeugteils hat also insbesondere keine Oberflächen-Strukturierung, die auf die an dieser anliegende Oberfläche der Dekorfolie oder Dekorschicht-Halbzeug aufgedrückt werden soll. Zwischen diesen beiden Verformungsschritten ist ein Abkühlen zumindest eines Dickenbereichs der Dekorschicht vorgesehen, mit der die im ersten Verformungsschritt entstandene Struktur der der Dekorschicht-Oberfläche vor weiterer Verformung geschützt wird.

Weiterhin kann insbesondere vorgesehen sein, dass die Verformungsoberfläche des ersten Werkzeugteils des ersten Presswerkzeugs, an der die Dekorfolie oder das Dekorschicht-Halbzeug bei der Verformung in den ersten Verformungszustand des Zwischenprodukts anliegt, in seiner ebenen Erstreckung eine glatte, also unstrukturierte Oberfläche hat. Diese Verformungsoberfläche des zweiten Werkzeugteils des ersten Presswerkzeugs hat also insbesondere keine Oberflächen-Strukturierung, die auf die an dieser anliegende Oberfläche der Dekorfolie oder Dekorschicht-Halbzeug aufgedrückt werden soll. Die Oberflächenstruktur oder Narbung wird beim Öffnen des ersten Presswerkzeugs oder des Kalibrierwerkzeugs durch restliche Adhäsionskräfte und die dadurch unterstützte Rückfederung des verpressten Faserformstoffes erzeugt. Die Oberflächenstruktur des Dekorschicht-Halbzeugs oder der Dekorfolie des durch Pressen des Dekorschicht-Halbzeugs oder der Dekorfolie und der Trägerschicht-Halbzeug entstandenen Zwischenprodukts wird dann durch die Abkühlung der Folienoberfläche für einen nachfolgenden Verfahrensschritt, bei dem die außen liegende Oberfläche des Dekorschicht-Halbzeugs oder der Dekorfolie gekühlt wird, erhalten, d.h. stabilisiert.

Nach dem erfindungsgemäßen Verfahren erfolgt also ein Verpressen der Halbzeuge, die jeweils als Ausgangsmaterialien oder Halbzeuge für das Trägerbauteil und die Dekorschicht verwendet werden, bei einer ersten Temperatur. Bei dem Verpressen erfolgt ein hinsichtlich der Gestalt des herzustellenden Innenverkleidungsteils nur teilweises Verformen derselben zu dem ersten Zwischenprodukt aufgrund der Gestalt der formgebenden Konturflächen des ersten Presswerkzeugs. Diese erste Verformung erfolgt insbesondere in einem Maße, dass die Fertigteildicke fast und vorzugsweise mit maximal 30 % Abweichung, erreicht ist. Dies bedeutet, dass in dem ersten Verformungsschritt die Halbzeuge auf ein Maß zusammengepresst werden, dass an jeder Stelle entlang der flächigen Erstreckung des Zwischenprodukts dessen Dicke maximal von der Dicke abweicht, die das im zweiten Presswerkzeug hergestellte Produkt an den jeweiligen Stellen hat.

Mit der nachfolgenden Abkühlung zumindest des Dekorschicht-Halbzeugs oder der Dekorfolie erfolgt ein Stabilisieren oder Erhalten der durch das Öffnen des ersten Presswerkzeugs entstandenen Oberflächen-Struktur, also der Strukturierung der Oberfläche der Dekorschicht des Zwischenprodukts oder der Dekorfolie, die somit bei der Durchführung des weiteren Verformens der Trägerschicht und der Dekorfolie in einem zweiten Pressverformungs-Werkzeug vorliegt. Die Abkühlung erfolgt dabei in einer Weise, dass noch eine Dehnbarkeit der genarbten Oberfläche der Dekorschicht gegeben ist, damit nachfolgend überhaupt ein Endprodukt mit einer dreidimensional zu beschreibenden Geometrie erzeugt werden kann. Dabei kann in Kauf genommen werden, dass durch die Abkühlung die Drapierbarkeit nachlässt. Dabei kann insbesondere vorgesehen sein, dass die Drapierbarkeit, also die Möglichkeit des Verziehens des Zwischenprodukts, zwischen 1% und 50% nachlässt. Hierin wird unter Drapierbarkeit oder der Möglichkeit des Verziehens insbesondere eine maximale Dehnung des Zwischenprodukts in einer Richtung in Bezug auf die Länge des Zwischenprodukts in dieser Richtung verstanden, bei der das Auflegen desselben auf ein Werkzeugteil des zweiten Presswerkzeugs noch zulässig ist, um ein hinsichtlich Qualität der Oberflächenstrukturierung noch akzeptables Endprodukt zu erhalten.

Bei einer Ausführungsform des erfindungsgemäßen Verfahrens wird, wie oben beschrieben, keine Narbung auf die außen liegende Oberfläche der Dekorschicht des Zwischenprodukts oder der Dekorfolie aufgeprägt, sondern diese entsteht beim Lösen des Zwischenprodukts von der Oberfläche des Werkzeugteils des ersten Presswerkzeugs. Die Kühlung soll bewirken, dass die Umformkräfte während der Verformung im zweiten Presswerkzeug nicht die entstandene Oberflächenstruktur zerstören oder die Oberflächenstruktur des zweiten Werkzeugs aufprägen.

Durch das erfindungsgemäße Verfahren bzw. die erfindungsgemäße Vorrichtung kann das Innenverkleidungsteil mit einer Oberflächenstruktur oder einer Topografie hergestellt werden, die einen arithmetischen Mittenrauwert Ra im Bereich von 10 µm bis 80 µm hat und vorzugsweise einen arithmetischen Mittenrauwert Ra im Bereich von 10 bis 50 µm und besonders bevorzugt im Bereich 20 µm bis 40 µm.

Wenn das Kühlmittel wie oben beschrieben beim Kontakt verdampft, erzeugen abfließende Kühlmittelströme keine ungewünschten Strukturen auf der zu strukturierenden Oberfläche.

Erfindungsgemäße Ausführungsformen werden im Folgenden an Hand der Figuren beschrieben, die zeigen:
- Figur 1 eine schematische Darstellung einer Ausführungsform eines ersten Presswerkzeugs der erfindungsgemäßen Herstellungsvorrichtung zur Herstellung eines Innenverkleidungsteils, wobei das erste Presswerkzeug in einer offenen Stellung gezeigt ist und wobei die formgebenden Verformungsoberflächen der Werkzeugteile derart geformt sind, dass mit dem ersten Presswerkzeug ein Zwischenprodukt mit in ihren flächigen Erstreckungen ebenen Oberflächen hergestellt werden kann,
- Figur 2 eine schematische Darstellung des ersten Presswerkzeugs in der Ausführungsform der Figur 1 in seinem geschossenen Zustand, in dem die Werkzeugteile desselben zusammen gefahren sind,
- Figur 3 eine schematische Darstellung einer Ausführungsform einer Kühlvorrichtung der erfindungsgemäßen Herstellungsvorrichtung, die an einem mit einem ersten Presswerkzeug nach der Figur 1 hergestellten ersten Zwischenprodukt angeordnet ist,
- Figur 4 eine schematische Darstellung einer Ausführungsform eines zweiten Presswerkzeugs der erfindungsgemäßen Herstellungsvorrichtung, das sich in einem offenen Zustand befindet und in die ein Zwischenprodukt eingeführt ist, das mit einem nach der Figur 1 ausgeführten ersten Presswerkzeug hergestellt ist, und mit dem insbesondere der Form nach das Endprodukt herstellt wird,
- Figur 5 eine schematische Darstellung einer in Bezug auf die Figur 1 weiteren Ausführungsform eines ersten Presswerkzeugs einer erfindungsgemäßen Herstellungsvorrichtung zur Herstellung eines Innenverkleidungsteils, wobei das erste Presswerkzeug in einer offenen Stellung gezeigt ist und wobei die formgebenden Verformungsoberflächen der Werkzeugteile derart geformt sind, dass mit dem ersten Presswerkzeug ein zweites Zwischenprodukt mit gekrümmten Oberflächen oder Oberflächenkonturen hergestellt werden kann,
- Figur 6 eine schematische Darstellung des ersten Presswerkzeugs in der Ausführungsform der Figur 5 in seinem geschlossenen Zustand, in dem die Werkzeugteile desselben zusammen gefahren sind,
- Figur 7 eine schematische Darstellung einer Ausführungsform einer Kühlvorrichtung der erfindungsgemäßen Herstellungsvorrichtung, die an einem mit einem ersten Presswerkzeug nach der Figur 5 hergestellten Zwischenprodukt angeordnet ist,
- Figur 8 eine schematische Darstellung einer Ausführungsform eines zweiten Presswerkzeugs der erfindungsgemäßen Herstellungsvorrichtung, die sich in einem offenen Zustand befindet und in die ein Zwischenprodukt eingeführt ist, das mit einem nach der Figur 6 ausgeführten ersten Presswerkzeug hergestellt ist,
- Figur 9 eine schematische Darstellung einer Ausführungsform eines zweiten Presswerkzeugs der erfindungsgemäßen Herstellungsvorrichtung, das sich in einem geschlossenen Zustand befindet und in die ein Zwischenprodukt eingeführt ist, das mit einem nach der Figur 1 oder der Figur 4 ausgeführten ersten Presswerkzeugs hergestellt ist, und mit dem insbesondere der Form nach das Endprodukt herstellt wird,
- Figur 10 eine Schnittdarstellung eines Ausschnitts eines nach der Herstellungsvorrichtung der Figur 2 dargestellten Zwischenprodukts.

Nach der Erfindung wird ein Innenverkleidungsteil hergestellt, das eine Trägerschicht oder eine Trägerteil-Komponente und eine Dekorfolie oder eine Dekorschicht aufweist. Zur Herstellung des Innenverkleidungsteils werden eine Trägerschicht aus Faserformstoff, insbesondere ein Naturfaserformstoff, und eine Dekorfolie oder eine Dekorschicht in zwei Schritten verformt, wobei diese in einem ersten schritt der zwei Schritt miteinander verpresst und insbesondere heiß verpresst werten.

Als Ausgangsmaterial oder Halbzeug für eine Trägerschicht, die zur Herstellung des Trägerbauteils verwendet wird, wird insbesondere ein Faserformstoff in Form einer Kunststoffmatte mit Faseranteilen und speziell eine Polypropylen (PP)-gebundene Fasermatte mit Naturfasern und/oder Kunststoff-Fasern, eine Polypopylen (PP)-gebundene Fasermatte mit keramischen, Karbon oder Glasfasern verwendet. Diese (Trägerschicht) kann insbesondere durch Wärmezufuhr plastifizierbar sein. Bei der Verwendung einer Polypropylen (PP)-gebundenen Fasermatte als Träger-Schicht weist diese vorzugsweise einen Materialanteil aus einem Fasermaterial auf, das vorzugsweise aus Naturfasern oder Glasfasern sowie aus Kunststoff- oder Karbon-Fasern und insbesondere mit Polypropylen (PP)-Fasern (Bindefunktion) gebildet ist. Alternativ oder zusätzlich kann als Fasermatte auch Nature-Fiber-PP (NFPP) oder Glasfaser-PP verwendet werden. Als Naturfasern können beispielsweise Fasern aus Holz, Kenaf, Hanf, Jute, Flachs, Chinagras (Boehmeria nivea), Rattan, Soja, Okra (Abelmoschus esculentus), Banane, Bambus, Kokosnuss, Kokosbast, Baumwolle, Curaua (Ananas lucidus), Abaca (Musa textilis), Kiefer, Ananas, Bastpalme (Raphia farinifera) und/oder Sisal verwendet werden. Auch können synthetische Fasern verendet werden. Auch können Späne oder Schnitzel aus Holz als Ausgangsmaterial für das Trägermaterial verwendet werden. Als synthetische Fasern können Carbonfasern, Fasern aus Polyester, Acryl, Aramid, Twaron, Kevlar, Technora, Vinalon, Zylon und/oder Polypropylen Verwendung finden. Auch können eine Kombination von mehreren Arten der genannten Naturfasern oder anderen Fasern in der Trägerschicht verwendet werden. Im Rahmen der vorliegenden Erfindung umfasst der Begriff "Polymere" sowohl Homopolymere als auch Copolymere der genannten Polymersorten.

Die Fasern des Faserformstoffs können gebildet sein aus: bezogen auf ihr jeweiliges Gesamtgewicht aus 30 Gewichtsprozent bis 70 Gewichtsprozent Naturfasern und 70 Gewichtsprozent bis 30 Gewichtsprozent Fasern aus einem oder mehreren thermoplastischen Polymeren, wie insbesondere Fasern aus Polypropylen und/oder Propylen, Copolymeren, sowie gegebenenfalls Additive, wie Bindemittel, Füllstoffe und/oder Farbstoffe, wobei der Anteil der optionalen Additive 0,5 Gewichtsprozent bis 15 Gewichtsprozent bezogen auf das Gesamtgewicht der Fasern oder des Faserformstoffs betragen kann.

Nach der Erfindung kann bei diesen Ausführungsformen, jedoch auch generell, vorgesehen sein, dass die Fasern aus einem oder mehreren thermoplastischen Polymeren als Bindemittel gebildet sind, die beim Heißverpressen des verwendeten Faserformstoffs plastifiziert werden und beim Abkühlen erstarren, so dass die natürlichen Fasern miteinander verkleben oder eine feste Matrix bilden, in welche die Naturfasern eingebettet sind. Ferner kann der verwendete Faserformstoff, jeweils bezogen auf sein Gesamtgewicht 40 Gewichtsprozent bis 60 Gewichtsprozent Naturfasern und 60 Gewichtsprozent bis 40 Gewichtsprozent Fasern aus einem oder mehreren thermoplastischen Polymeren enthalten.

Die Herstellung des erfindungsgemäß vorgesehenen Trägermaterials oder Faserformstoffes kann dadurch erfolgen, dass die Naturfasern und gegebenenfalls die weiteren Fasern aus einem oder mehreren thermoplastischen Polymeren zunächst miteinander vermengt und auf eine Auflagefläche und insbesondere auf ein textiles Flächengebilde und insbesondere ein dünnes Unterlagevlies oder Transportvlies aufgelegt werden. Generell kann das textile Flächengebilde ein Gewebe, Gewirke oder Vlies sein. Zum Beispiel können als Faserformstoff nass- oder luftgelegte bzw. gekrempelte Vliese verwendet werden. Die Vliese können natürliche oder synthetischen Fasern oder Mischungen von natürlichen und synthetischen Fasern enthalten. Die Vermengung der Fasern untereinander kann in einem turbulenten Luftstrom, beispielsweise in einer Verwirbelungsvorrichtung, vorgenommen werden. Anschließend wird das dadurch entstandene Fasergemenge, insbesondere auf der Auflagefläche, mechanisch zu einer Bahn verdichtet, optional in vorbestimmter Weise wie insbesondere entlang einer einheitlichen Hauptrichtung, ausgerichtet und somit orientiert und in ihre Größe festgelegt. Da die Fasern auf einem dünnen Unterlagevlies oder Transportvlies aufliegen, liegt somit eine zweilagige Faserbahn, nämlich aus einer Lage Vlies und einer Lage Fasern vor. Die erhaltene zweilagige Faserbahn wird mittels Walzen und einer Nadelvorrichtung zu einem Nadelvlies verdichtet und mittels einer Schneidvorrichtung zu Matten konfektioniert.

Die verwendeten Fasermatten oder mattenartigen Faserformstoffe haben eine Dicke von 5 bis 30 mm, vorzugsweise 10 bis 20 mm und ein Flächengewicht von 80 bis 4.000 g/m², vorzugsweise von 500 bis 2.500 g/m², und besonders bevorzugt von 1.200 bis 2.200 g/m².

Vorzugsweise werden die Fasern in einem vorbereitenden oder einem dem Verfahren vorangehenden Schritt zu einem mattenförmigen Ausgangs-Halbzeug für die Trägerschicht vorgeformt. Anschließend wird mit Anwendung von Druck und Temperatur durch Aufschmelzen des Kunststoff-Anteiles zur Ausbildung einer Kunststoffmatrix ein plastisches Matten-Material oder eine Kunststoffmatte hergestellt, in dem die Fasern und die Kunststoffmatrix miteinander verbunden sind. In dieser Form kann die Kunststoffmatte als ein Trägerschicht-Halbzeug oder eine erste oder zweite Schicht dem erfindungsgemäßen Verfahren oder der erfindungsgemäßen Vorrichtung zur Verfügung gestellt werden.

Die verwendete Dekorfolie oder das Dekorschicht-Halbzeug kann ein oder mehrlagig ausgebildet sein. Die Gesamtdicke der verwendeten Dekorfolie liegt im Bereich von 40 bis 1000 µm, vorzugsweise 60 bis 200 µm und insbesondere 80 bis 120 µm. Das Material der verwendeten Dekorfolie enthält einen polymeren Wertstoff. Dabei wird unter einem "polymeren Werkstoff' ein Material verstanden, das mehr als 60 Gew.-%, vorzugsweise mehr als 80 Gew.-% und ggf. bis zu 100 Gew.-% eines Polymers oder einer Mischung von zwei oder mehr Polymeren, bezogen auf das Gesamtgewicht des Materials enthält. Das mindestens eine Polymer - nachfolgend auch als Matrixpolymer bezeichnet - ist im vorliegenden Ausführungsbeispiel ein thermoplastisches Polymer bzw. Thermoplast, das sich wiederholt, d.h. mehrfach erwärmen und umformen lässt. Das Matrixpolymer kann aber auch aus der Gruppe, umfassend Polyolefine, Polyethylen, Polyacrylate, Polypropylen, und/oder Mischungen davon gewählt werden.

Das Trägerteil-Halbzeug oder der verwendete Faserformstoff, insbesondere der Naturfaserformstoff, und die verwendete Dekorfolie oder das Dekorschicht-Halbzeug können jeweils einen identischen Thermoplasten enthalten und damit eine im Wesentlichen gleiche Fließgrenze bzw. Erweichungstemperatur aufweisen. Es kann vorgesehen sein, dass unterschiedliche Thermoplasten für den Faserformstoff, insbesondere den Naturfaserformstoff, und für die Dekorfolie verwendet werden. In diesem Fall, jedoch auch generell, kann vorgesehen sein, dass der Faserformstoff, insbesondere der Naturfaserformstoff, und die Dekorfolie unterschiedliche Fließgrenzen bzw. Erweichungstemperaturen aufweisen. Zweckmäßigerweise können die Thermoplaste dann so gewählt werden, dass der Thermoplast der Dekorfolie eine höhere Fließgrenze bzw. Erweichungstemperatur als der Thermoplast des Faserformstoffs, insbesondere des Naturfaserformstoffs, aufweist. Nach einer erfindungsgemäßen Ausführungsform ist die Fließgrenze des Thermoplasts der Dekorfolie oder des Dekorschicht-Halbzeugs um maximal 10 Grad Celsius geringer als der Thermoplast des Faserformstoffs oder des Trägerteil-Halbzeugs.

Generell kann das Dekorschicht-Halbzeug oder die Dekorschicht aus einer Folie gebildet sein. Insbesondere kann das Dekorschicht-Halbzeug oder die Dekorschicht eine Kompakt-Folie oder mehrschichtige Verbundfolie sein.

Zur Bildung der Dekorschicht oder des Dekorschicht-Halbzeugs kann insbesondere eine Folienschicht aus einem geeigneten Ausgangsmaterial verwendet werden.

Bei dem Verfahren nach der Erfindung werden thermoplastische, vorzugsweise PP-Folien für die Folienoberflächen verwendet, so dass die Ausbildung der Oberflächenstrukturierung beim Lösen des Dekorschicht-Halbzeugs oder der Dekorfolie von dem jeweiligen Werkzeugteil des ersten Presswerkzeugs vorzugsweise bei schmelzfähigen Oberflächen-Schichten des Dekorschicht-Halbzeugs oder der Dekorfolie erfolgt.

Außer dem Dekorschicht-Halbzeug oder der Dekorationsschicht und dem Trägerschicht-Halbzeug kann bei dem erfindungsgemäßen Verfahren zusätzlich zumindest eine Verstärkungs-Schicht, wie z.B. eine Schicht aus Glasfaser-Gewebe verwendet werden, die bei Einlegen der Halbzeug in das erste Presswerkzeug auf derjenigen Oberfläche des Trägerschicht-Halbzeugs gelegen ist, die der Dekorfolie oder dem Dekorschicht-Halbzeug zugewandt ist.

Die Verbindung der Dekorschicht und der Trägerschicht, also des Dekorschicht-Halbzeugs und des Trägerteil-Halbzeugs miteinander, optional mit der Verstärkungs-Schicht, erfolgt durch ein Anschmelzen der Dekorationsschicht und der Trägerschicht und bei einem Aufeinanderliegen derselben und ein Anpressen in dem ersten Presswerkzeug mit einem für den Anwendungsfall geeigneten Druck.

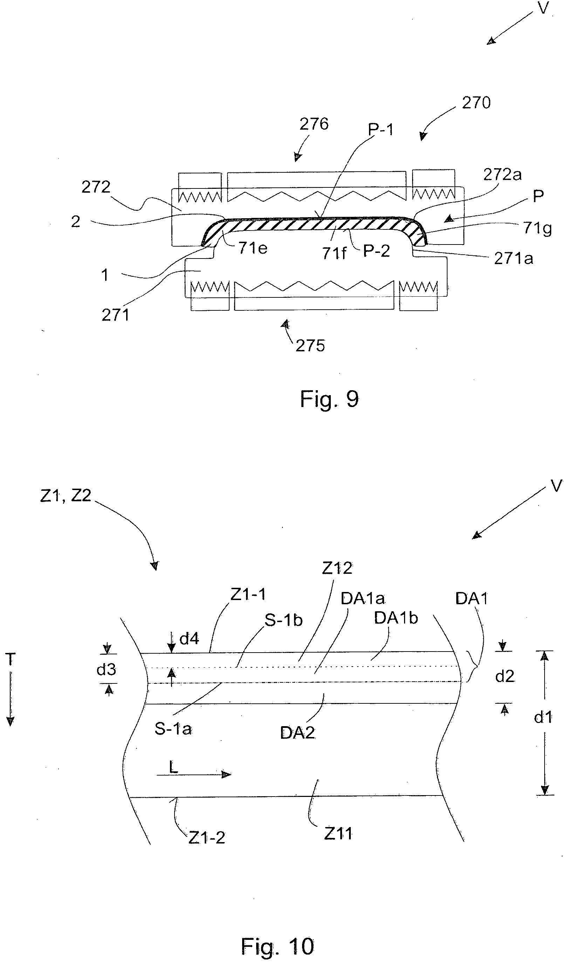

Das herzustellende Innenverkleidungsteil P ist aus einer Trägerschicht 1 und einer Dekorschicht 2 gebildet (Figur 9) und weist insgesamt eine erste Oberfläche P-1 und eine zweite Oberfläche P-2 auf, die entgegen gesetzt zur ersten Oberfläche P-1 orientiert ist. Wenn das herzustellende Innenverkleidungsteil P im Kraftfahrzeug eingebaut ist, ist die erste Oberfläche dem Innenraum desselben zugewandt und bildet somit eine Sichtseite desselben. Die erste Oberfläche P-1 des Innenverkleidungsteils P wird von einer ersten, sich flächig erstreckenden Oberfläche der Dekorschicht 2 des Innenverkleidungsteils P gebildet.

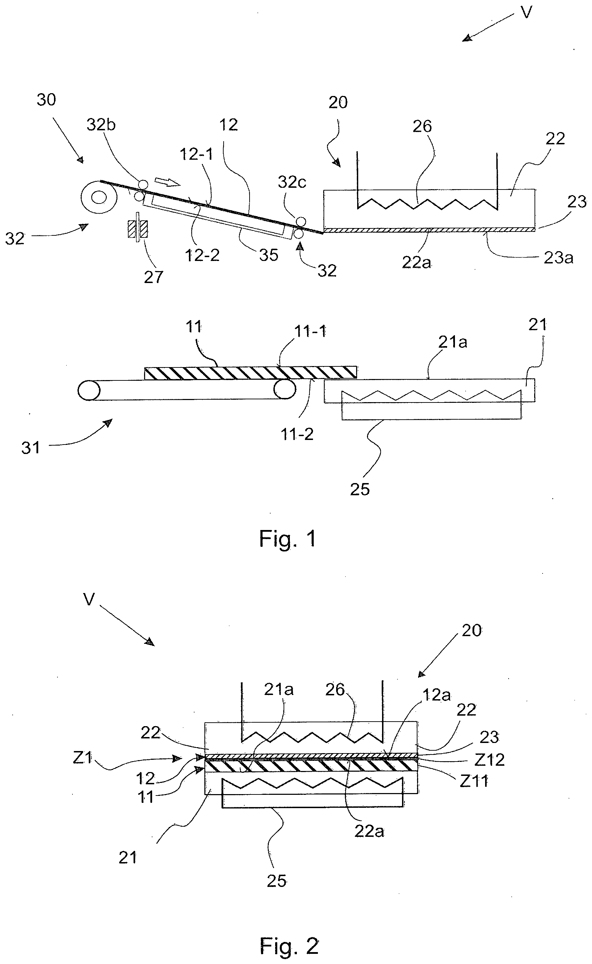

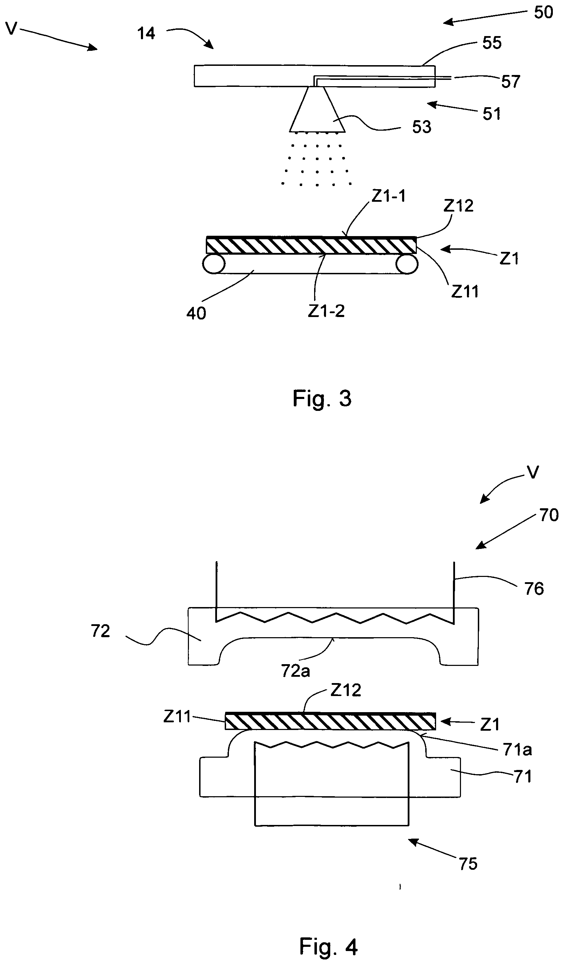

Nach der Erfindung ist eine Vorrichtung V und ein Verfahren zur Herstellung eines Innenverkleidungsteils P mit einem Trägerbauteil 1 aus einem Faserformstoff und einer Dekorschicht 2 oder einer Dekorfolie vorgesehen, wobei zwischen dem Trägerbauteil 1 und der Dekorschicht 2 eine Verstärkungsschicht gelegen sein kann. Die Vorrichtung 1 bzw. das Verfahren ist in den Figuren 1 bis 5 dargestellt.

In Figur 1 ist eine Halbzeug-Zufuhrvorrichtung 30 zur Zufuhr eines zur Bildung der Trägerschicht 1 des herzustellenden Bauteils P (Figur 9) vorgesehenen Halbzeugs 11 und eines zur Bildung der Dekorschicht 2 vorgesehenen Halbzeugs 12 dargestellt. Weiterhin ist in der Figur 1 ein erstes Presswerkzeug 20 als Bestandteil der erfindungsgemäßen Vorrichtung V zur Herstellung eines Innenverkleidungsteils P mit einem ersten Werkzeugteil 21 und einem zweiten Werkzeugteil 22 dargestellt. Das erste Werkzeugteil 21 weist eine erste formgebende Verformungsoberfläche 21 a und das zweite Werkzeugteil 22 weist eine zweite formgebende Verformungsoberfläche 22a auf. Bei der Zuführung des Halbzeugs 11 an das erste Presswerkzeug 20 ist eine erste Oberfläche 11-1 des Halbzeugs 11 dem zweiten Werkzeugteil 22 oder einem bei diesem gelegenen Dekorschicht-Halbzeug 12 zugewandt, während eine zweite Oberfläche 11-2 des Halbzeugs 11 dem ersten Werkzeugteil 21 zugewandt ist. Analog ist bei der Zuführung des Halbzeugs 12 an das erste Presswerkzeug 20 eine erste Oberfläche 12-1 des Halbzeugs 12 dem zweiten Werkzeugteil 22 zugewandt, während eine zweite Oberfläche 12-2 des Halbzeugs 12 dem ersten Werkzeugteil 21 oder einem bei diesem gelegenen Trägerschicht-Halbzeug 11 zugewandt ist.

Das herzustellende Innenverkleidungsteil P kann an seiner Montageseite oder seiner zweiten Oberfläche P-2, die entgegen gesetzt zu der ersten Oberfläche P-1 derselben gelegen ist, zumindest eine Vorrichtung zur Verbindung des Innenverkleidungsteils P mit Teilen der Karosserie oder einem Trägerbauteil derselben, wie einer Autotür, dem Cockpit-seitigen Vorderteil der Karosserie oder dem Dach der Karosserie aufweisen. Eine solche Vorrichtung kann ein Anbauteil, das als Vorsprung ausgeführt sein kann, oder eine Vertiefung und Bohrung aufweisen. Die Befestigung oder Verbindung des Innenverkleidungsteils mit der Karosserie oder einem Trägerbauteil oder einer Kombination derselben kann vorgesehen sein.

Die erste Oberfläche P-1 der Dekorschicht 1 oder des Innenverkleidungsteils P weist generell eine über die flächige Erstreckung reliefartig konturierte Oberfläche auf, um eine spezielle Haptik und/oder ein spezielles Erscheinungsbild zu erzeugen. Somit weist die erste Oberfläche P-1 eine Oberflächen-Strukturierung entlang der flächigen Erstreckung der ersten Oberfläche P-1 auf.

Nach einer Ausführungsform der erfindungsgemäßen Herstellungsvorrichtung V ist die formgebende Verformungsoberfläche 22a der zweiten Pressverformungs-Werkzeughälfte 22 des ersten Presswerkzeugs 20, die zur Aufnahme des Dekorfolien-Halbzeugs 12 vorgesehen ist, mit einer Antihaftschicht 23 beschichtet, so dass in diesem Fall die formgebende Verformungsoberfläche 23a des zweiten Pressverformungs-Werkzeugteils 22 durch die Oberfläche 23a der Antihaftschicht 23 gebildet werden kann. Erfindungsgemäß wird die Oberflächenstruktur auf der Dekoroberfläche des Zwischenprodukts und somit des herzustellenden Produkts P dadurch erreicht, dass das Zwischenprodukt Z1, Z2 von der Oberfläche 23a der Antihaftschicht 23 gelöst wird. Dies erfolgt in einem Zustand, bei dem die Temperatur der Dekorschicht Z12 bzw. Z22 unterhalb der Fließgrenze oder der Schmelztemperatur des Materials bzw. Halbzeugs der Dekorschicht Z12 bzw. Z22 gelegen ist, so dass die herzustellende Oberflächenstruktur entsteht.

Dabei kann insbesondere vorgesehen sein, dass die Temperatur der Dekorschicht Z12 bzw. Z22 beim Öffnen und insbesondere zum Zeitpunkt des Beginns des Öffnens des ersten Presswerkzeugs 20 um mindestens 1,0 Grad und maximal 10 Grad und in besonderen Ausführungsformen des Verfahrens um mindestens 1,0 Grad und maximal 5 Grad unterhalb der Fließgrenze oder der Schmelztemperatur des Materials bzw. Halbzeugs Z12 bzw. Z22 der jeweiligen Dekorschicht gelegen ist. Dies kann insbesondere dadurch bewerkstelligt werden, dass das zweite Werkzeugteil 22 zumindest in einem entlang der Werkzeugoberfläche 22a verlaufenden Bereich auf eine Temperatur gebracht worden ist und bei Öffnen eine Temperatur aufweist, die um mindestens 1,0 Grad und maximal 5 Grad unterhalb der Fließgrenze oder der Schmelztemperatur des Materials bzw. Halbzeugs Z12 bzw. Z22 der Dekorschicht gelegen ist. Dabei kann insbesondere vorgesehen sein, dass die Temperatur zumindest 30 Sekunden lang bis zum Öffnen des ersten Presswerkzeugs in dem jeweiligen Temperaturbereich gehalten wird.

Beim Lösen der Dekorschicht Z12 bzw. Z22 von der Werkzeugoberfläche 22a und gegebenenfalls von der Oberfläche 23a der Antihaftschicht 23 ist die Dekorschicht Z12 bzw. Z22 in einem über die flächige Erstreckung derselben etwa gleichem Abstand zur Werkzeugoberfläche 22a bzw. gegebenenfalls der Oberfläche 23a gelegen, d.h. vorzugsweise wird die Dekorschicht Z12 bzw. Z22 nicht abgeschält von der Werkzeugoberfläche 22a bzw. gegebenenfalls der Oberfläche 23a. Insbesondere kann vorgesehen sein, dass die Dekorschicht Z12 bzw. Z22 insgesamt von einem Spannrahmen gehalten wird und dass der Spannrahmen mit der Dekorschicht ohne Lagenänderung des Spannrahmens bzw. der Dekorschicht von dem Werkzeugteil 22 entfernt wird. Auf diese Weise wird erreicht, dass ein durch das erste Presswerkzeug hergestelltes Zwischenprodukt Z1, Z2 nur in vorbestimmter Weise zur Ausbildung der Oberflächenstruktur am Werkzeugteil 22 haftet. Beim Vorhandensein einer Antihaftschicht 23 auf der Werkzeugoberfläche 22a kann die Antihaftschicht 23 insbesondere aus einer Teflonschicht gebildet sein oder aus Teflon bestehen. Die Teflonschicht kann Keramik-Bestandteile enthalten, um die Standfestigkeit der Antihaftschicht 23 zu gewährleisten.

Die Orientierung der Werkzeugteile 21, 22 kann insbesondere in Bezug auf die Schwerkraftrichtung unterschiedlich sein. Nach einer erfindungsgemäßen Ausführungsform der Vorrichtung V ist das erste Presswerkzeug 20 derselben derart orientiert, dass - wie es in der Figur 1 dargestellt ist - die erste formgebende Verformungsoberfläche 21a des erste Werkzeugteils 21 des ersten Presswerkzeugs 20 entgegen gesetzt zur Schwerkraftrichtung orientiert ist und die zweite formgebende Verformungsoberfläche 22a des zweiten Werkzeugteils 22 dieser zugewandt ist. Nach einer weiteren erfindungsgemäßen Ausführungsform der Vorrichtung V ist das erste Presswerkzeug 20 derselben in umgekehrter Weise orientiert. Auch kann nach einer weiteren erfindungsgemäßen Ausführungsform der Vorrichtung V vorgesehen sein, dass die flächige Erstreckungen jeweils der ersten formgebenden Verformungsoberfläche 21a und der zweiten formgebenden Verformungsoberfläche 22a entlang der Schwerkraftrichtung S verlaufen.

Weiterhin weist die erfindungsgemäße Vorrichtung V eine Kühlvorrichtung 50 und ein zweites Presswerkzeug 70 mit einem ersten Werkzeugteil 71 und einem zweiten Werkzeugteil 72 auf, mit der ein mit dem ersten Presswerkzeug 20 hergestelltes Zwischenprodukt Z1, Z2 konturverformt wird, also eine "Kontur-Umformung" vorgenommen wird.

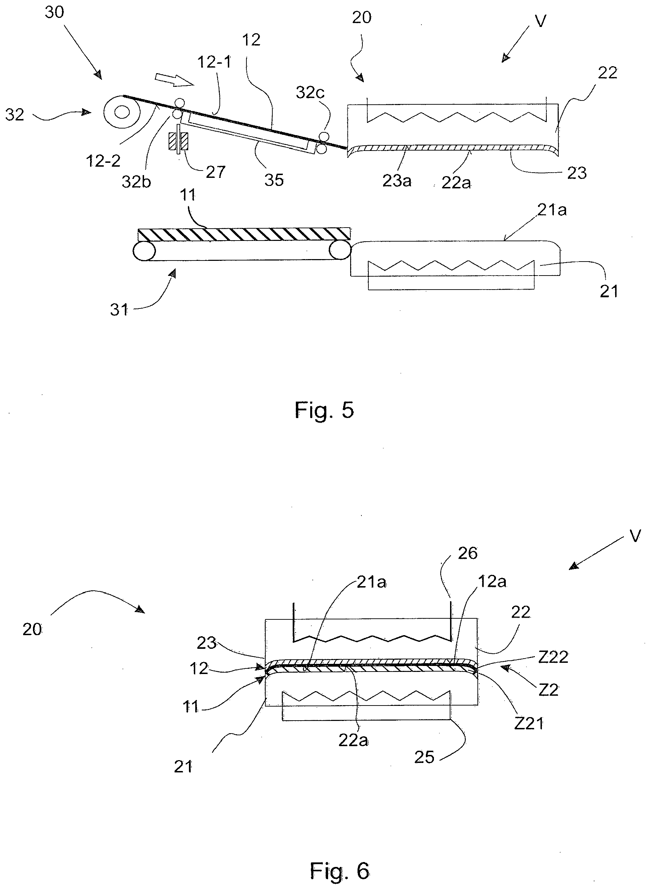

Das erste Werkzeugteil 71 des zweiten Presswerkzeugs 70 weist eine erste formgebende Verformungsoberfläche 71a und das zweite Werkzeugteil 72 weist eine zweite formgebende Verformungsoberfläche 72a auf. Aufgrund des Pressverfahrens mit dem ersten Presswerkzeug 20 liegt ein Zwischenprodukt Z1 mit einer Trägerschicht Z11 und einer Dekorschicht Z12 (Figur 2), Z2 mit einer Trägerschicht Z21 und einer Dekorschicht Z22 (Figur 6) vor, das nach dem erfindungsgemäßen Verfahren in das zweite Presswerkzeug 70 eingelegt wird. Eine erste Oberfläche Z1-1 oder Z2-1 des Halbzeugs Z1 bzw. Z2 ist dem zweiten Werkzeugteil 72 zugewandt, während die zweite Oberfläche Z1-2 oder Z2-2 des Halbzeugs Z1 bzw. Z2 dem ersten Werkzeugteil 71 zugewandt ist. Die erste formgebende Verformungsoberfläche 71a und die zweite formgebende Verformungsoberfläche 72a sind derart gestaltet, dass beim Pressvorgang aufgrund des Zusammenfahrens der Werkzeugteile 71, 72 das zwischen diesen gelegene Zwischenprodukt Z1, Z2 in seiner Gestalt umgeformt wird.

Unter "Konturverformung" wird hierin verstanden, dass die Gestalt und somit auch der Konturverlauf der Oberflächen, also der ersten und der zweiten Oberfläche der Kombination der Halbzeuge 11, 12 bei der Ausbildung des Endprodukts oder Innenverkleidungsteils P gegenüber dem jeweiligen Zwischenprodukt, also z.B. dem ersten oder des zweiten Zwischenprodukt Z1 bzw. Z2 verändert wird. "Kontur-Umformung" bedeutet also eine Umformung der flächigen Erstreckung eines Halbzeugs bzw. Zwischenprodukts Z1 unter Veränderung der Form oder des Krümmungsverlaufs der Oberflächenkontur des Halbzeugs oder Zwischenprodukts Z1, Z2.

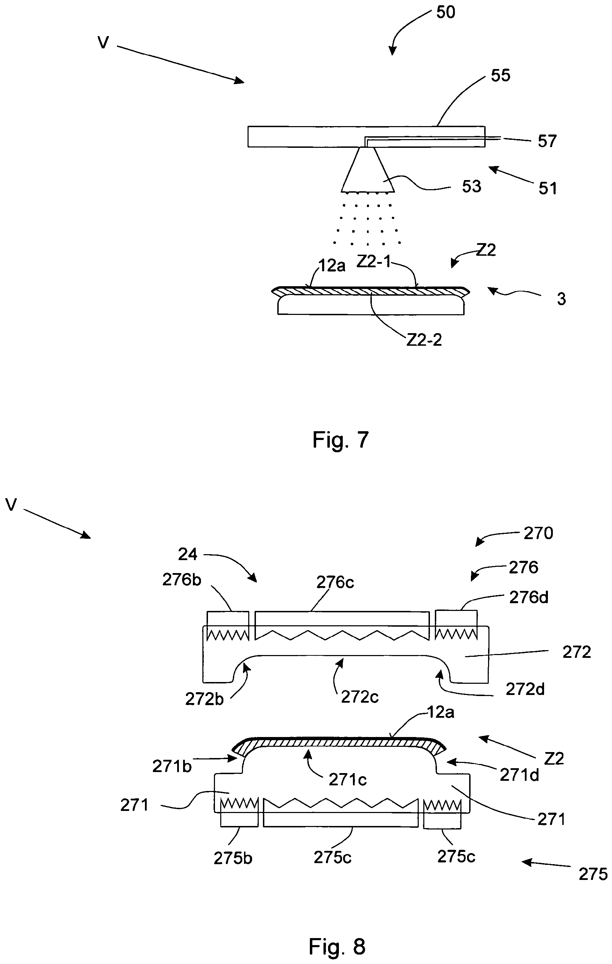

Dabei kann insbesondere vorgesehen sein, dass im ersten Presswerkzeug 20 ein erstes Zwischenprodukt Z1 hergestellt wird, das in seiner flächigen Erstreckung krümmungslos gebildet ist, wie es in der Figur 2 dargestellt ist. Alternativ dazu kann vorgesehen sein, dass im ersten Presswerkzeug 20 ein erstes Zwischenprodukt Z1 hergestellt wird, das in seiner flächigen Erstreckung gekrümmt gebildet ist und somit dreidimensional zu beschreiben ist, wie es in der Figur 7 dargestellt ist.

Durch das zweite Presswerkzeug 70, 270 erfolgt eine Verformung des jeweiligen Zwischenprodukts Z1, Z2 insgesamt, so dass eine "Kontur-Umformung" des ersten Zwischenprodukts Z1 realisiert wird. Die "Kontur-Umformung" des Zwischenprodukts Z1, Z2 betrifft insbesondere eine "Kontur-Umformung" der Gestalt der ersten Oberfläche 12-1 der Dekorschicht 12 bzw. Z12, Z22 des Zwischenprodukts Z1, Z2 in eine Gestalt der ersten Oberfläche 12-1 der Dekorschicht 2 des Verkleidungsteils P.

Durch die Formgebungen des ersten und des zweiten Presswerkzeugs 20 bzw. 70, 270 kann die "Kontur-Umformung" bei einer Ausführungsform des Verfahrens insbesondere derart ausgeführt sein, dass keine Änderung der Krümmungsart und somit nicht die Einführung eines Wendepunkts in den Querschnittsprofilverlauf des Zwischenprodukts Z1, Z2 bzw. des Verkleidungsteils P oder in den flächigen Verlauf der Oberfläche 12-1 eingeführt wird.

Die Krümmungsänderung der Oberfläche 12-1 bei der "Kontur-Umformung" kann insbesondere derart vorgesehen sein, dass es einen Oberflächenbereich der Oberfläche 12-1 des Zwischenprodukts Z1, Z2 und der Außenfläche P-1 des Verkleidungsteils P gibt, bei denen derselbe Punkt bei der "Kontur-Umformung" des Zwischenprodukts Z1, Z2 zu dem Verkleidungsteil P eine Strecke zurücklegt, die vom Betrag her zumindest die Dicke des Verkleidungsteils P an der jeweiligen Stelle des jeweiligen Punkts beträgt. Dieser Betrag kann in bevorzugten Ausführungsformen auch das Zweifache der Dicke des Verkleidungsteils P an der jeweiligen Stelle des Punkts betragen.

Dazu haben die formgebende Verformungsoberfläche 21a, des ersten Werkzeugteils 21 und die zweite formgebende Verformungsoberfläche 22a eine dreidimensional zu beschreibende Oberflächenform. Nach einer Ausführungsform des erfindungsgemäßen Verfahrens bzw. der erfindungsgemäßen Vorrichtung V wird aus einer ebenen ersten und zweiten Oberfläche der Halbzeuge 11, 12 ein Zwischenprodukt Z1, Z2 mit einem gekrümmten und zueinander komplementären Verlauf ihrer Oberflächen Z2-1, Z2-2 geformt, wie dies in den Figuren 5 und 6 gezeigt ist.

Im Gegensatz dazu ist nach einer anderen Ausführungsform des erfindungsgemäßen Verfahrens bzw. der erfindungsgemäßen Vorrichtung V das erste Presswerkzeug 20 derart ausgeführt, dass dieses beim Zusammenfahren der Werkzeugteile 21, 22 zwar ein Zusammenpressen, jedoch keine Kontur-Umformung der Kombination der zwischen diesen gelegenen Halbzeuge 11, 12 bewirkt (Figuren 1, 2, 3), so dass das Zwischenprodukt ebene Oberflächen Z1-1, Z1-2 hat.

Nach einer alternativen Ausführungsform der erfindungsgemäßen Vorrichtung V ist das erste Presswerkzeug 20 derart ausgeführt, dass dieses beim Zusammenfahren der Werkzeugteile 21, 22 ein Zusammenpressen und zusätzlich eine Konturverformung der Kombination der zwischen diesen gelegenen Halbzeuge 11, 12 bewirkt (Figuren 5, 6, 7), so dass das Zwischenprodukt Z2 gekrümmt verlaufende Oberflächen Z2-1, Z2-2 hat. In diesem Fall sind die Verformungsöberflächen 21 a, 22a derart geformt, dass nach Ausführung eines Pressverfahrens mit dem ersten Presswerkzeug 20 ein Zwischenprodukt Z2 mit gekrümmt verlaufenden Oberflächen Z2-1, Z2-2 entsteht. Weiterhin sind die Verformungsoberflächen 71a, 72a, des zweiten Presswerkzeugs 70 derart geformt, dass das Zwischenprodukt Z2 unter Vornahme einer weiteren Konturverformung zu einem Endprodukt P mit gegenüber den Oberflächenkrümmungen des Zwischenprodukts Z2 wenigstens abschnittsweise stärkere Oberflächenkrümmungen aufweist.

Erfindungsgemäß weist die erfindungsgemäße Vorrichtung V eine Kühlvorrichtung 50 auf, mit der eine Abkühlung zumindest eines Dicken-Teilbereichs der Dekorschicht Z12, Z22 des jeweiligen Zwischenprodukts Z1, Z2 durch Besprühen einer ersten Oberfläche Z1-1, Z2-1 derselben mittels eines Kühlmediums vorgenommen werden kann. Das Kühlmedium kann flüssig, gas- oder auch dampfförmig, sein.

Nach einer weiteren Ausführungsform des erfindungsgemäßen Verfahrens erfolgt die Kühlung erst dann, wenn das Halbzeug bereits im zweiten Presswerkzeug 70 liegt. Bei dieser Ausführungsform kann die Kühlung in dem zweiten Presswerkzeug 70 erfolgen, wenn dieses derart teilweise geschlossen ist, dass sich in diesem zwischen dem zweiten Werkzeugteil 72 und der Oberfläche Z1-1, Z2-1 der Dekorschicht ein kanalförmiger Raum ausbildet. Nach dieser Ausführungsform des Verfahrens wird in diesem Raum ein Kühlmedium und zum Beispiel Nassdampf eingeleitet. Grundsätzlich kann der Kühlvorgang zwischen den Prozesszuständen "Presswerkzeug 20 geöffnet" und "Presswerkzeug 70 schließt" stattfinden. Auch kann die Abkühlung der Zwischenprodukt-Oberfläche Z1-1, Z2-1 durch normale Konvektion durchgeführt werden.)

Die dem ersten Presswerkzeug 20 zugeordnete Halbzeug-Zufuhrvorrichtung 30 muss nach der Erfindung nicht Bestandteil der erfindungsgemäßen Vorrichtung V zur Herstellung eines Innenverkleidungsteils P sein und ist also nach der Erfindung optional vorgesehen. In der Figur 1 weist die Halbzeug-Zufuhrvorrichtung 30 eine erste Halbzeugzufuhr-Vorrichtung 31 in Form einer Fördervorrichtung zur Bereitstellung und Zulieferung des zur Bildung der Trägerschicht 1 eines Produkts P vorgesehenen Halbzeugs 11 an die erste formgebende Verformungsoberfläche 21 a des ersten Werkzeugteils 21 und optional eine zweite Halbzeugzufuhr-Vorrichtung 32 in Form einer Abrollvorrichtung zum Abrollen des zur Bildung der Dekorschicht 2 vorgesehenen Halbzeugs 12, um dieses Halbzeug 12 der zweiten formgebenden Verformungsoberfläche 22a des zweiten Werkzeugteils 22 bereitzustellen. Die erste Halbzeugzufuhr-Vorrichtung 31 z.B. in Form einer Fördervorrichtung kann eine Bewegungskinematik aufweisen, mit der die erste Halbzeugzufuhr-Vorrichtung 31 gegenüber dem ersten Pressverformungs-Werkzeug 20 bewegbar ist und zu diesem hin und von diesem weg bewegt werden kann. Auf diese Weise kann ein auf der ersten Halbzeugzufuhr-Vorrichtung 31 gelegenes zur Bildung der Trägerschicht 1 vorgesehenes Halbzeug 11 an das erste Werkzeugteil 21 übergeben und auf die erste formgebende Verformungsoberfläche 21a des ersten Werkzeugteils 21 aufgelegt werden.

Nach der Erfindung kann auch vorgesehen sein, dass das zur Bildung der Dekorschicht 2 vorgesehene Halbzeug 12 insbesondere mittels der zweiten Halbzeugzufuhr-Vorrichtung 32 bereits in beschnittener Form, z.B. mittels eines Spannrahmens, der zweiten formgebenden Verformungsoberfläche 22a des zweiten Werkzeugteils 22 zugeführt wird.

Bei der Ausführung der zweiten Halbzeugzufuhr-Vorrichtung 32 mit einer Abrollvorrichtung kann diese, wie es in der Figur 1 dargestellt ist, aus mehreren Paaren 32b, 32c von Zufuhr- oder Halterollen gebildet sein. Dabei sind die Rollen eines Paares derart angeordnet, dass das Halbzeug 12 durch die Rollenpaare 32b, 32c hindurchgeführt werden kann und dabei von den Rollenpaaren 32b, 32c gehalten werden kann. Eine oder beide Rollen eines Paares kann motorisch angetrieben sein, um die Zufuhr des jeweiligen Halbzeugs 12 an das zweite Werkzeugteil 22 oder eine Haltevorrichtung 35 wie z.B. einen Spannrahmen zu bewirken. Die zweite Halbzeugzufuhr-Vorrichtung 32 kann weitere Zufuhrrollen aufweisen, die das Halbzeug 12 aufnehmen und in Richtung zur zweiten formgebenden Verformungsoberfläche 22a des zweiten Werkzeugteils 22 weiterleiten können. Die Haltevorrichtung 35 kann einen Spannrahmen und optional auch eine Bewegungskinematik aufweisen, mit der der Spannrahmen gegenüber dem zweiten Werkzeugteil 22 bewegt werden kann. Dadurch kann insbesondere vorgesehen sein, dass das Halbzeug 12 zunächst auf die Haltevorrichtung 35 oder den Spannrahmen aufgelegt wird und dass die Haltevorrichtung 35 oder der Spannrahmen mittels einer Bewegungskinematik relativ zum zweiten Werkzeugteil 22 derart bewegbar ist, dass das Halbzeug 12 an die zweite formgebende Verformungsoberfläche 22a des zweiten Werkzeugteils 22 angelegt werden kann.

Nach der Erfindung kann die erfindungsgemäße Vorrichtung V zur Herstellung eines Innenverkleidungsteils P eine Schneidvorrichtung 27 aufweisen, die die Funktion einer Ablängvorrichtung hat, mit der also das von einer Abrollvorrichtung 32b, 32c bereit gestellte Halbzeug 12 in Abschnitte geschnitten und somit geteilt werden und in dieser Form an das zweite Werkzeugteil 22 übergeben werden kann. Jeder Abschnitt hat dabei eine Form, die den Abmessungen der formgebende Verformungsoberfläche 22a des zweiten Werkzeugteils 22 entspricht, so dass dieser jeweils für das mit dem Presswerkzeug 20 vorgesehene Pressverfahren verwendet werden kann.

Vor dem Schließen des Presswerkzeugs 20 liegt das Sandwich aus dem für die Bildung der Dekorschicht 2 vorgesehenen Halbzeug 12 oder einer Folie und aus dem für die Bildung der Trägerschicht 1 vorgesehenen Halbzeug 11 oder einer Fasermatte auf dem Werkzeugteil 21 auf. Dabei kann das Sandwich mit einem Spannrahmen gehalten sein. Die Werkzeugoberfläche 22a ist aufgeheizt. Eine vorzeitige Berührung der Folie mit der heißen Werkzeugoberfläche 22a ist zu vermieden, da dies die Folie sofort zerstören würde.

Vorzugsweise weisen die zwei Werkzeugteile 22a, 22b des ersten Presswerkzeugs 20 zur Kalibrierung der Fasermatte jeweils eine Heizvorrichtung 25, 26 auf.

Davon unabhängig kann das erste und/oder zweite Werkzeugteil 71, 72 optional eine Heizvorrichtung 75 bzw. 76 aufweisen, wie diese schematisch in der Figur 5 dargestellt ist.

Die erste und die zweite formgebende Verformungsoberfläche 21a bzw. 22a des ersten Presswerkzeugs 20 können jeweils als ebene Fläche ausgeführt sein. In diesem Fall findet nur eine Pressung von Trägerschicht und Dekorschicht, jedoch keine Verformung statt (Figuren 1, 2) und liegt für die Behandlung des Zwischenprodukts Z1 in der Abkühlvorrichtung 50 ein Zwischenprodukt mit eben verlaufenden Konturen der Oberflächen desselben vor.

In einer alternativen Ausführungsform der Vorrichtung V (Figuren 5, 6) ist die erste und die zweite formgebende Verformungsoberfläche 21a bzw. 22a des ersten Presswerkzeugs 20 mit gekrümmt und gleichförmig und insbesondere äquidistant zueinander verlaufenden Oberflächenkonturen derart ausgeführt, dass das Zwischenprodukt durch Zusammenfahren der Werkzeugteilen 71, 72 in seiner Kontur verformt wird. Dementsprechend liegt dann in der Kühlvorrichtung 50 ein Zwischenprodukt Z2 mit gekrümmt verlaufenden Oberflächenkonturen vor.

Bei dem Pressverfahren im ersten Presswerkzeug 20 werden die Halbzeuge 11, 12 durch Zusammenfahren der Werkzeugteile 21, 22 gepresst und optional in ihrer Gestalt nicht in Ihrer Oberflächenkontur umgeformt (Figur 2) oder optional zusätzlich in ihrer Oberflächenkontur umgeformt (Figur 5). Durch entsprechende Aufheizung der Werkzeugteile 21, 22 des ersten Presswerkzeugs 20 mittels der Heizvorrichtungen 25, 26 derselben werden die Halbzeuge 11, 12 derart aufgeheizt, dass die Fließgrenzen der Materialien beider Halbzeuge zunächst erreicht werden.

Durch Zusammenfahren der beiden Werkzeugteile 21 und 22 und die Durchführung eines Press-Schritts (Figur 2 bzw. 6) wird eine stoffschlüssige Verbindung zwischen Trägerbauteil und der Dekorfolie zur Bildung eines Zwischenprodukts Z1 bzw. Z2 hergestellt. Für die Beaufschlagung der Halbzeuge 11, 12 mit Temperatur kann eine Heizvorrichtung 25 im ersten Werkzeugteil 21 und eine Heizvorrichtung 26 im zweiten Werkzeugteil 22 integriert sein.

Nach einer Ausführungsform des erfindungsgemäßen Verfahrens bzw. der erfindungsgemäßen Vorrichtung V wird in dem ersten Presswerkzeug 20 ein Verbinden der Halbzeuge 11, 12 und ein teilweises Umformen bei einer ersten Temperatur, deren Wert z.B. zwischen 180 und 185°C liegt, durchgeführt. Bei einer erfindungsgemäßen Ausführungsform herrscht in diesem ersten Schritt in den Halbzeugen 11, 12 ungefähr die gleiche Temperatur, wobei diese innerhalb Genauigkeitsgrenzen mit einer Abweichung von ± 5°Grad Celsius vorliegt.

Ferner erfährt der Rohling in dem zweiten Presswerkzeug 70, 270 eine weitere Umformung, mit der er auf ein Endmaß des herzustellenden Produkts gebracht wird, so dass der Oberflächenkontur-Umformvorgang fertig gestellt wird.

Vorzugsweise weisen die Werkzeugteile 71, 72 des zweiten Presswerkzeugs 70 keine Heizvorrichtungen auf. In besonderen Anwendungsfällen können diese eine Kühlvorrichtung aufweisen. Die Temperatur der Werkzeugteile 71, 72 ist derart vorgesehen, dass das Zwischenprodukt bei der Entnahme desselben aus dem zweiten Presswerkzeug 70 eine Temperatur höchstens 80 Grad Celsius hat, um ein stabiles Produkt P zu erhalten.

Nach einer Ausführungsform des erfindungsgemäßen Verfahrens kann vorgesehen sein, dass das Material des Trägerteil-Halbzeugs ein thermoplastisches Material aufweist, das identisch mit oder ähnlich zu dem thermoplastisches Material ist, das in dem Dekorschicht-Halbzeugs vorhanden ist, so dass das Trägerteil-Halbzeug und das Dekorschicht-Halbzeug dadurch eine im Wesentlichen gleiche Fließgrenze bzw. Erweichungstemperatur aufweisen. Es können aber unterschiedliche Thermoplasten für das Trägerteil-Halbzeug und für das Dekorschicht-Halbzeug verwendet werden. Dann weisen das Trägerteil-Halbzeug und das Dekorschicht-Halbzeug unterschiedliche Fließgrenzen bzw. Erweichungstemperaturen auf. Insbesondere kann vorgesehen sein, dass in diesem Fall die Thermoplasten so gewählt werden, dass der Thermoplast des Dekorschicht-Halbzeugs eine insbesondere um 10 Grad Celsius höhere Fließgrenze oder Erweichungstemperatur hat als der Thermoplast des das Trägerteil-Halbzeugs. So kann die Temperaturdifferenz zwischen der ersten und der zweiten Temperatur auf ein Mindestmaß reduziert werden, die andererseits erforderlich ist, um ein ungewünschtes Eindrücken der Oberflächenstruktur des Dekorschicht-Halbzeugs zu vermeiden.

Die erfindungsgemäß vorgesehene Kühlvorrichtung 50 weist eine Ausgabevorrichtung 51 zum Aufbringen eines Kühlmittels auf die erste Oberfläche Z1-1, Z2-1 des Zwischenprodukts Z1, Z2 und insbesondere in Form einer Sprühvorrichtung 51 zum Sprühen eines Kühlmittels auf die erste Oberfläche Z1-1, Z2-1 des Zwischenprodukts Z1, Z2 auf. Mit der Ausgabevorrichtung bzw. Sprühvorrichtung 51 wird erfindungsgemäß das Kühlmittel auf die erste Oberfläche Z1-1, Z2-1 des Zwischenprodukts Z1, Z2 aufgebracht. Insbesondere ist vorgesehen, dass mit einer Sprühvorrichtung 51 ein Kühlmittel auf die erste Oberfläche Z1-1, Z2-1 des Zwischenprodukts Z1, Z2 aufgesprüht wird. Der Kühlmittelauftrag soll dabei sehr gleichmäßig erfolgen, so dass erfindungsgemäß gas- oder dampfförmige Kühlmedien vorzugsweise verwendet werden.

Durch das Aufbringen des Kühlmittels auf die erste Oberfläche Z1-1, Z2-1 des Zwischenprodukts Z1, Z2 wird insbesondere erreicht, dass die Dekorschicht Z12, Z22 zumindest im Bereich der Oberfläche Z1-1, Z2-1 abgekühlt wird. Insbesondere ist erfindungsgemäß vorgesehen, dass das Kühlmittel derart auf das Zwischenprodukt Z1, Z2 aufgebracht wird, dass zumindest der der Ausgabevorrichtung 51 zugewandte, an der ersten Oberfläche Z1-1, Z2-1 und entlang zu dieser verlaufenden Dickenabschnitts DA1b des Zwischenprodukts Z1, Z2, zumindest abschnittsweise um zumindest 15 Grad Celsius abgekühlt wird. Somit bleibt dabei die Kerntemperatur des Trägerbauteils im Wesentlichen konstant.

Insbesondere kann vorgesehen sein, das durch das Aufbringen des Kühlmittels auf die erste Oberfläche Z1-1, Z2-1 des Zwischenprodukts Z1, Z2 die Temperatur der ersten Oberfläche Z1-1, Z2-1 um zumindest 10 Grad Celsius reduziert wird.

Der Dickenabschnitt DA1 b kann insbesondere ein Dickenabschnitt sein, der sich in der Tiefenrichtung T des Zwischenprodukts Z1, Z2 über maximal 50 % der lokalen Dicke d2 der Dekorschicht Z12, Z22 des Zwischenprodukts Z1, Z2 erstreckt, wobei sich der Dickenabschnitt DA1b in der Längsrichtung L des Zwischenprodukts Z1, Z2 gesehen entlang der ersten Oberfläche Z1-1, Z2-1 erstreckt. In der Schnittdarstellung der Figur 10 ist für ein nach der Herstellungsvorrichtung der Figur 2 hergestelltes Zwischenprodukt Z1 die Trägerschicht Z11 und die Dekorschicht Z12 des Zwischenprodukts Z1 dargestellt. Für die Dekorschicht Z12 kann hinsichtlich der mit der Kühlvorrichtung 50 erreichten Reduzierung der in der Dekorschicht Z12 auftretenden Temperatur eine Schichtebene S-1 a definiert werden, bis zu der eine Temperaturreduktion im Wesentlichen erreicht und wirksam wird. Die Schichtebene S-1a verläuft in einem Abstand d3 von der ersten Oberfläche Z1-1. Weiterhin kann eine Schichtebene S-1 b definiert werden, die in einem Abstand d4 von der ersten Oberfläche Z1-1 verläuft. Erfindungsgemäß erfolgt eine Abkühlung der Dekorschicht Z12, Z22 derart, dass die Schicht zwischen der Schichtebene S-1b und der ersten Oberfläche Z1-1 eine Temperatur hat, die um zumindest 15 Grad Celsius geringer ist als die Trägerschicht Z11, Z21.

Die Kühlvorrichtung 50 kann eine Ausgabevorrichtung 51 aufweisen, die insbesondere an einer Führungsvorrichtung 55 angeordnet sein kann, mit der die Ausgabevorrichtung 51 entlang der Oberfläche Z1-1, Z2-1 positioniert werden kann, um Kühlmittel auf diese flächendeckend oder auf vorbestimmte Abschnitte des jeweiligen Zwischenprodukts Z1, Z2 aufbringen zu können. Eine Zufuhrleitung 57 verbindet einen Kühlmittel-Speicher mit der Ausgabevorrichtung 51, so dass durch die Leitung 57 der Ausgabevorrichtung 51 zugeführtes Kühlmedium zugeführt werden kann. Die Ausgabevorrichtung 51 ist derart gegenüber der Dekorschicht Z1-1 angeordnet, dass das Kühlmittel auf die Oberfläche derselben aufgebracht und z.B. aufgesprüht wird. Hierbei kann vorgesehen sein, dass das Zwischenprodukt Z1, Z2 auf einer Zustellvorrichtung oder Fördervorrichtung 55 positioniert ist, mit der das Zwischenprodukt dem ersten Presswerkzeug 20 entnommen und dem zweiten Presswerkzeug 70 zugeführt werden kann.

Die Kühlvorrichtung erlaubt es, z.B. die Dekorfolie soweit abzukühlen, dass deren Temperatur unterhalb der Fließgrenze bzw. Erweichungstemperatur ist. D.h., die Kühlvorrichtung dient dazu, die Dekorfolie von der ersten Temperatur von z.B. 180 bis 185°C auf eine zweite Temperatur von ca. 160°C abzukühlen. Die erste und/oder die zweite Kalibrierwerkzeughälfte kann eine antihaftend beschichtete Oberfläche aufweisen, um zu sicherzustellen, dass Trägerbauteil oder Dekorfolie beim Öffnen des Pressverformungs-Werkzeugs nicht an einer der beiden Pressverformungs-Werkzeughälften haften bleibt und dadurch unerwünscht verformt wird.

Die Kühlvorrichtung 50 kann einen Kühlmittelkreislauf aufweisen, in dem ein Kältegerät eingefügt ist, um das Kühlmittel abzukühlen. Die Kühlvorrichtung 50 kann gasförmige Kühlmittel, wie z.B. Luft oder reinen Stickstoff als Kühlmittel verwenden. Als flüssiges Kühlmittel kann z.B. Wasser verwendet werden. Vorzugsweise ist vorgesehen, dass die Kühlvorrichtung 50 einen Sprühkopf 53 zum Aufbringen von Kühlmittel, insbesondere eines flüssigen Kühlmittels, zumindest auf die Dekorfolie aufweist. Mit dem Sprühkopf 53 kann nach dem Öffnen des ersten Presswerkzeugs 20 durch Entfernen eines der beiden Werkzeugteile 21, 22 das Kühlmittel auf die Dekorfolie 2 aufgebracht werden.

Mit dem Sprühkopf 53 kann Wasser als Kühlmittel auf die Seite des Rohlings aufgebracht werden, auf der sich die Dekorfolie befindet, um diese von der ersten Temperatur von 180 bis 185°C um ca. 20 bis 25°C auf die zweite Temperatur von ca. 160°C abzukühlen. Der Sprühkopf 53 weist eine Vielzahl von Austrittsöffnungen für Wasser auf. Der Sprühkopf 53 ist derart ausgeführt, dass Kühlmedium und insbesondere Wasser diesen als Nebel mit feinen Tröpfchen verlässt.

Vorzugsweise ist vorgesehen, dass zwischen dem ersten Schritt und dem zweiten Schritt wenigstens die Dekorfolie mit einem Kühlmittel beaufschlagt wird. Das Kühlmittel kann zur Steigerung der Kühlleistung durch einen Wärmetauscher geführt werden, der mit einer Kältemaschine verbunden ist. So kann eine besonders rasche Abkühlung erreicht werden, was die Herstellungszeit nochmals reduziert.

Bei Verwendung eine Kühlmediums mit einer Temperatur zwischen 10 Grad Celsius und 18 Grad Celsius, also bei der Verwendung zum Beispiel von normal temperiertem Leitungswasser, ist die auf das jeweilige Zwischenprodukt mit dem Kühlmedium abgegebene Kühlleistung erfindungsgemäß bereits dann zu hoch, wenn sichtbare Wassertröpfchen auf der Folienoberfläche verbleiben. Die 3D-Umformbarkeit im zweiten Presswerkzeug 70 ist dann nicht oder nur noch in sehr bedingtem Maß möglich.

Das verwendete Kühlmittel kann gasförmig sein, z.B. Luft oder auch ein inertes Gas, wie z.B. reiner Stickstoff sein, um ungewollte chemische Reaktionen zu unterbinden. Vorzugsweise wird wenigstens die Dekorfolie mit einem flüssigen Kühlmittel beaufschlagt. Als flüssiges Kühlmittel kann z.B. Wasser verwendet werden.

Es kann ein Kühlmittel verwendet werden, dessen Siedepunkt unterhalb der ersten und/oder der zweiten Temperatur liegt, so dass das flüssige Kühlmittel bei Kontakt verdampft. Ferner ist es vorteilhaft wenn das Kühlmittel verdampft, da dadurch verhindert wird, dass Rückstände des Kühlmittels auf der Dekorfolie verbleiben. Dadurch kann eine homogene Temperaturverteilung auf der Oberfläche sichergestellt sowie ein zu starkes abkühlen des Trägerbauteils verhindert werden.

Eine erfindungsgemäße Vorgabe und Maßnahme für das Aufbringen von Kühlmittel kann sein, dass die Temperatur im Abschnitt DA1b um 20 bis 25°C auf eine zweite Temperatur T2 von ca. 160°C abgesenkt wird, also unterhalb der Erweichungstemperatur des Thermoplasten. Hingegen soll dabei die Temperatur im Bereich der Trägerschicht Z11, Z21 des ZwischenproduktsZ1, Z2 im Bereich der ersten Temperatur T1 von 180 bis 185°C verbleiben, was dadurch sichergestellt ist, dass das Kühlmittel relativ kurzzeitig auf die Oberfläche Z1-1, Z2-1 der Dekorschicht Z12, Z22 aufgebracht wird.

Erfindungsgemäß kann vorgesehen sein, dass in dem zweiten Presswerkzeug keine Erwärmung des Zwischenprodukts vorgenommen wird, so dass eine Ausführungsform des zweiten Presswerkzeugs 70 keine Heizung aufweist.

Nach der Erfindung wird somit ein Verfahren zur Herstellung eines Innenverkleidungsteils P mit einem Trägerbauteil 1 aus einem Faserformstoff, insbesondere einem Naturfaserformstoff, und einer Dekorfolie 2 bereitgestellt, aufweisend die Schritte:
- in einem ersten Presswerkzeug 20 mit zwei Werkzeugteilen 22a, 22b Vornahme eines ersten Zusammenpressens und Verformens eines für die Bildung der Trägerschicht 1 vorgesehenen Halbzeugs 11 und eines für die Bildung der Dekorschicht 2 vorgesehenen Halbzeugs 12 unter Ausbildung einer Struktur einer ersten Oberfläche der Dekorschicht 2 und dadurch Bildung eines Zwischenprodukts Z1, Z2 mit einem ersten Verformungszustand; und
- Abkühlung zumindest eines Dicken-Teilbereichs des Querschnitts eines Dekorschicht-Abschnitts des Zwischenprodukts Z1, Z2 durch Abkühlen einer ersten Oberfläche Z1-1, Z1-2; Z2-1, Z2-2 derselben mittels eines Kühlmediums,
- in einem zweiten Presswerkzeug 70 mit zwei Werkzeugteilen 71, 72 Vornahme eines zweiten Zusammenpressens und weiteren Verformens der Trägerschicht 11 und der Dekorschicht 2, deren an der Oberfläche gelegenen Dicken-Teilbereichs des Dekorschicht-Abschnitts aufgrund der Abkühlung eine geringere Temperatur hat als bei dem Verformen im ersten Presswerkzeug, so dass ein Verfahrens-Endprodukt P; Z11, Z12; Z21, Z22 mit einem zweiten Verformungszustand gebildet wird.

## Patentansprüche

1. Verfahren zur Herstellung eines Innenverkleidungsteils (P) mit einem Trägerbauteil (1) aus einem Faserformstoff und einer Dekorfolie (2), aufweisend die Schritte:
- in einem ersten Presswerkzeug (20) mit zwei Werkzeugteilen (21, 22) Vornahme eines ersten Zusammenpressens mit oder ohne Verformen eines für die Bildung der Trägerschicht (1) vorgesehenen Trägerschicht-Halbzeugs (11) und eines für die Bildung der Dekorschicht (2) vorgesehenen Dekorschicht-Halbzeugs (12) und Einstellung einer Temperatur, bei der die Fließgrenze der Materialien beider Halbzeuge (11, 12) erreicht wird,
- Öffnen des ersten Presswerkzeugs (20) und dabei Ausbildung einer Strukturierung einer ersten Oberfläche (12-1) des Dekorschicht-Halbzeugs (12) durch Lösen des Dekorschicht-Halbzeugs (12) von einer zweiten Formgebungsfläche (22a) des Presswerkzeugs (20) und dadurch Bildung eines Zwischenprodukts (Z1, Z2), das eine Trägerschicht (Z11, Z21) und eine Dekorschicht (Z12, Z22) mit einer strukturierten ersten Oberfläche (Z1-1, Z2-1) aufweist,
- mittels einer Kühlvorrichtung (50) Aufbringen eines Kühlmediums auf die erste Oberfläche (Z1-1; Z2-1) des Zwischenprodukts (Z1, Z2) und dadurch Abkühlung zumindest eines an der ersten Oberfläche (Z1-1; Z2-1) des Zwischenprodukts (Z1, Z2) gelegenen Dicken-Teilbereichs des Querschnitts eines Zwischenprodukt-Abschnitts des Zwischenprodukts (Z1, Z2) zur Stabilisierung der Oberflächenstruktur der ersten Oberfläche (Z1-1; Z2-1) des Zwischenprodukts (Z1, Z2),
- in einem zweiten Presswerkzeug (70) mit zwei Werkzeugteile (71, 72) Vornahme eines zweiten Zusammenpressens und Verformens des Zwischenprodukts (Z1, Z2), so dass das Innenverkleidungsteil als ein Verfahrens-Endprodukt (P) gebildet wird.

2. Verfahren nach Anspruch 1, wobei das erste Zusammenpressen eine Kontur-Umformung der Halbzeuge (11, 12) beinhaltet, sodass das Zwischenprodukt (Z1, Z2) in seiner flächigen Erstreckung gekrümmt gebildet ist.

3. Verfahren nach Anspruch 1 oder 2, wobei das Kühlmedium aus Wasser gebildet ist.

4. Verfahren nach einem der vorstehenden Ansprüche, wobei eine formgebende Verformungsoberfläche (22a) eines zweiten Werkzeugteils (22) des ersten Presswerkzeugs (20), die zur Aufnahme des Dekorfolien-Halbzeugs (12) vorgesehen ist, mit einer Antihaftschicht (23) beschichtet ist.

5. Verfahren nach einem der vorstehenden Ansprüche, wobei als Material für das Trägerteil-Halbzeug (11) ein Faserformstoff mit einem Flächengewicht von 80 bis 4.000 g/m² verwendet wird.

6. Verfahren nach einem der vorstehenden Ansprüche, wobei als Material für das Trägerteil-Halbzeug (11) ein Faserformstoff verwendet wird, der Naturfasern mit einem Anteil von 40 Gewichtsprozent bis 60 Gewichtsprozent jeweils bezogen auf sein Gesamtgewicht und Fasern aus einem oder mehreren thermoplastischen Polymeren mit einem Anteil von 60 Gewichtsprozent bis 40 Gewichtsprozent aufweist.

7. Vorrichtung (V) zur Herstellung eines Innenverkleidungsteils (P) mit einem Trägerbauteil (1) und einer Dekorschicht (2), die Vorrichtung aufweisend:
- ein erstes Presswerkzeug (20) mit zwei Werkzeugteilen (21, 22), die jeweils eine formgebenden Konturfläche (21 a, 22a) und eine Heizvorrichtung (25, 26) aufweisen,
- eine Kühlvorrichtung (50) mit einer Ausgabevorrichtung (51) zum Aufbringen eines Kühlmittels auf eine erste Oberfläche (Z1-1, Z2-1) des Zwischenprodukts (Z1, Z2), um zumindest einen an der ersten Oberfläche (Z1-1; Z2-1) des Zwischenprodukts (Z1, Z2) gelegenen Dicken-Teilbereich des Querschnitts eines Zwischenprodukt-Abschnitts des Zwischenprodukts (Z1, Z2) zu kühlen,
- ein zweites Presswerkzeug (70) mit zwei Werkzeugteilen (71, 72), die jeweils eine formgebende Konturfläche (71a, 72a) zur Bildung eines Innenverkleidungsteils (P) durch eine Kontur-Umformung des Zwischenprodukts (Z1, Z2) aufweisen.

8. Vorrichtung (V) zur Herstellung eines Innenverkleidungsteils (P) nach Anspruch 7, wobei die formgebenden Konturflächen (21 a, 22a) des ersten Presswerkzeugs (20) in Größe und Gestalt derart geformt sind, dass ein in seiner flächigen Erstreckung gekrümmtes Zwischenprodukt (Z1, Z2) geformt wird.

9. Vorrichtung (V) zur Herstellung eines Innenverkleidungsteils (P) nach Anspruch 7 oder 8, wobei die Ausgabevorrichtung (51) einen Sprühkopf (53) aufweist.

10. Vorrichtung (V) zur Herstellung eines Innenverkleidungsteils (P) nach einem der Ansprüche 7 bis 9, wobei eine formgebende Verformungsoberfläche einer Werkzeughälfte (22a) des ersten Presswerkzeugs (20) mit einer Antihaftschicht (23) beschichtet ist.

## Claims

1. Method for manufacturing an inner lining part (P) with a support component (1) made of a fiber molding material and a decoration foil (2), the method comprising the steps:
- in a first press tool (20) with two tool parts (21, 22) execution of a first compressing a support layer semi-manufactured product (11) for forming the support layer (1) and a decoration layer semi-manufactured product (12) for forming the decoration layer (2), and adjustment of a temperature at which the melting point of the materials of the semi-manufactured products (11, 12) is achieved, wherein the first compressing is executed with or without deformation,
- opening the first press tool (20) and at the same time forming a texturing of a first surface (12-1) of the decoration layer semi-manufactured product (12) by separating the decoration layer semi-manufactured product (12) from a second forming surface (22a) of the press tool (20) and thereby forming an intermediate product (Z1, Z2) which comprises a support layer (Z11, Z21) and a decoration layer (Z12, Z22) with a textured first surface (Z1-1, Z2-1),
- by means of a cooling device (50) applying a coolant onto the first surface (Z1-1; Z2-1) of the intermediate product (Z1, Z2) and thereby cooling at least one partial thickness portion of the cross-section of an intermediate product section of the intermediate product (Z1, Z2) for stabilization of the surface texturing of the first surface (Z1-1; Z2-1) of the intermediate product (Z1, Z2), wherein the partial thickness portion is situated at the first surface (Z1-1; Z2-1) of the intermediate product (Z1, Z2),
- in a second press tool (70) with two tool parts (71, 72) execution of a second compressing and deformation of the intermediate product (Z1, Z2) so that the inner lining part as a manufacturing end product (P) is formed.

2. Method according to claim 1, wherein the first compressing comprises a contour deformation of the semi-manufactured products (11, 12) so that the intermediate product (Z1, Z2) is formed as product which is curved in its planar extension.

3. Method according to claim 1 or 2, wherein the coolant is made of water.

4. Method according to one of the preceding claims, wherein a forming deformation surface (22a) of a second tool part (22) of the first press tool (20) which is provided for reception of the decoration foil semi-manufactured product (12) is coated with a nonstick coating (23).

5. Method according to one of the preceding claims, wherein as material for the support part semi-manufactured product (11) a fiber molding material with a mass per unit area between 80 and 4.000 g/m² is used.

6. Method according to one of the preceding claims, wherein as material for the support part semi-manufactured product (11) a fiber molding material is used which comprises natural fibers with a portion of 40 percent by weight to 60 percent by weight respectively related to its total weight and fibers of one or more thermoplastic polymers with a portion of 60 percent by weight to 40 percent by weight.

7. Device (V) for manufacturing an inner lining part (P) with a support component (1) and a decoration layer (2), the device comprising:
- a first press tool (20) with two tool parts (21, 22) which respectively comprise a forming contour surface (21 a, 22a) and a heating device (25, 26),
- a cooling device (50) with an output device (51) for applying a coolant on a first surface (Z1-1, Z2-1) of the intermediate product (Z1, Z2) in order to cool at least a partial thickness area of the cross-section of an intermediate product section of the intermediate product (Z1, Z2), wherein the partial thickness area is situated at the first surface (Z1-1; Z2-1) of the intermediate product (Z1, Z2),
- a second press tool (70) with two tool parts (71, 72) which respectively comprise a forming contour surface (71 a, 72a) for forming an inner lining part (P) by a contour deformation of the intermediate product (Z1, Z2).

8. Device (V) for manufacturing of an inner lining part (P) according to claim 7, wherein the forming contour surfaces (21 a, 22a) of the first press tool (20) are shaped in size and form such that an intermediate product (Z1, Z2) which is cambered in its planar extension is formed.

9. Device (V) for manufacturing of an inner lining part (P) according to claim 7 or 8, wherein the output device (51) comprises a spray head (53).

10. Device (V) for manufacturing of an inner lining part (P) according to one of claims 7 to 9, wherein a forming deformation surface of a tool part (22a) of the first press tool (20) is coated with a nonstick coating (23).

## Revendications

1. Procédé pour la fabrication d'une pièce de revêtement intérieur (P) avec un composant de support (1) en matière moulée fibreuse et une feuille de décor (2), comportant les étapes suivantes :
- exécution dans un premier outil de presse (20) avec deux parties d'outil (21, 22) d'une première compression avec ou sans déformation d'un produit semi-fini (11) à couche de support prévu pour la formation de la couche de support (1) et d'un produit semi-fini de couche de décor (12) prévu pour la formation de la couche de décor (2) et mise au point d'une température à laquelle la limite de fluage des matériaux des deux produits semi-finis (11, 12) est atteinte,
- ouverture du premier outil de presse (20) et formation à cet effet d'une structuration d'une première surface (12-1) du produit semi-fini de couche de décor (12) par détachement du produit semi-fini de couche de décor (12) d'une deuxième surface de moulage (22a) de l'outil de presse (20) et formation de ce fait d'un produit intermédiaire (Z1, Z2), qui comporte une couche de support (Z11, Z21) et une couche de décor (Z12, Z22) avec une première surface structurée (Z1-1, Z2-1),
- application d'un milieu de refroidissement au moyen d'un dispositif de refroidissement (50) sur la première surface (Z1-1, Z2-1) du produit intermédiaire (Z1, Z2) et refroidissement de ce fait d'au moins une zone partielle d'épaisseur de la section transversale d'un tronçon de produit intermédiaire du produit intermédiaire (Z1, Z2) située sur la première surface (Z1-1, Z2-1) du produit intermédiaire (Z1, Z2) pour stabiliser la structure de surface de la première surface (Z1-1 ; Z2-1) du produit intermédiaire (Z1, Z2),
- exécution d'une deuxième compression et déformation du produit intermédiaire (Z1, Z2) dans un deuxième outil de presse (70) avec deux parties d'outil (71, 72) de telle manière que la pièce de revêtement intérieure est formée comme un produit fini du procédé (P).

2. Procédé selon la revendication 1, la première compression comprend une déformation du contour des produits semi-finis (11, 12) de manière que le produit intermédiaire (Z1, Z2) est formé courbé dans son extension plane.

3. Procédé selon la revendication 1 ou 2, le milieu de refroidissement étant formé d'eau.

4. Procédé selon l'une quelconque des revendications précédentes, une surface de déformation moulante (22a) d'une deuxième partie d'outil (22) du premier outil de presse (20), prévue pour recevoir le produit semi-fini de feuille de décor (12), étant revêtue d'une couche antiadhésive (23).

5. Procédé selon l'une quelconque des revendications précédentes, une matière moulée fibreuse d'un grammage de 80 à 4 000 g/m² étant utilisée comme matériau pour le produit semi-fini de la pièce de support (11).

6. Procédé selon l'une quelconque des revendications précédentes, une matière moulée fibreuse étant utilisée comme matériau pour le produit semi-fini de la pièce de support (11), qui comporte des fibres naturelles avec une part de 40 pour cent du poids à 60 pour cent du poids en référence respectivement à son poids total et des fibres d'un ou plusieurs polymères thermoplastiques avec une part de 60 pour cent du poids à 40 pour cent du poids.

7. Dispositif (V) pour la fabrication d'une pièce de revêtement intérieur (P) avec un composant de support (1) et une couche de décor (2), le dispositif comportant :
- un premier outil de presse (20) avec deux parties d'outil (21, 22), qui comportent respectivement une surface de contour moulante (21 a, 22a) et un dispositif de chauffage (25, 26),
- un dispositif de refroidissement (50) avec un dispositif de sortie (51) pour appliquer un milieu de refroidissement sur une première surface (Z1-1, Z2-1) du produit intermédiaire (Z1, Z2) pour refroidir au moins une zone partielle d'épaisseur de la section transversale d'un tronçon de produit intermédiaire du produit intermédiaire (Z1, Z2) située sur la première surface (Z1-1, Z2-1) du produit intermédiaire (Z1, Z2),
- un deuxième outil de presse (70) avec deux parties d'outil (71, 72), qui comportent respectivement une surface de contour moulante (71 a, 72a) pour former une pièce de revêtement intérieur (P) par déformation du contour du produit intermédiaire (Z1, Z2).

8. Dispositif (V) pour la fabrication d'une pièce de revêtement intérieur (P) selon la revendication 7, les surfaces de contour moulantes (21 a, 22a) du premier outil de presse (20) étant formées en taille et en configuration de telle sorte qu'un produit intermédiaire (Z1, Z2) est formé courbé dans son extension plane.

9. Dispositif (V) pour la fabrication d'une pièce de revêtement intérieur (P) selon la revendication 7 ou 8, le dispositif de sortie (51) comportant une tête de pulvérisation (53).

10. Dispositif (V) pour la fabrication d'une pièce de revêtement intérieur (P) selon l'une quelconque des revendications 7 à 9, une surface de déformation moulante d'une moitié d'outil (22a) du premier outil de presse (20) étant revêtue d'une couche antiadhésive (23).
